# EUROPEAN PATENT SPECIFICATION

(11) **EP 3 887 690 B1**
(45) Date of publication and mention of the grant of the patent: **15.05.2024**
(21) Application number: 19812867.0
(22) Date of filing: 20.11.2019
(51) Int. Cl.: F16G 15/06, B66C 1/00

(54) **A SHACKLE ASSEMBLY**
SCHÄKELANORDNUNG
ENSEMBLE MANILLE

(30) Priority: 28.11.2018 NL 2022084
(43) Date of publication of application: 06.10.2021
(73) Proprietor: IQIP Holding B.V., 3361 EP Sliedrecht (NL)
(72) Inventor: GUNTER, David Howell, Ferndown Dorset (GB)
(74) Representative: De Vries & Metman
(86) International application number: PCT/NL2019/050763
(87) International publication number: WO 2020/111938

(56) References cited:
- EP-A1- 2 487 103
- DE-A1- 10 018 549
- GB-A- 1 349 430
- GB-A- 2 301 860
- US-A- 5 921 115
- US-A1- 2006 101 799

## Description

The present invention relates to a shackle assembly, comprising a shackle body, a shackle pin and a pin displacement mechanism for moving the shackle pin along its centreline between a shackle closed position and a shackle open position.

Such a shackle assembly is known from WO 2013/095107. The known shackle assembly has a driving device which is coupled to the shackle body for driving the shackle pin and is arranged to reciprocate the shackle pin between a shackle closed position and a shackle open position. The driving device comprises a hydraulic cylinder which is mounted at an outer side of the shackle body and extends parallel to the centreline of the shackle pin. A disadvantage of the known shackle assembly is that it takes a lot of space next to the shackle body, in particular in the shackle open position where the hydraulic cylinder is extended. Besides, the centre of gravity of the known shackle assembly is located far from the shackle body.

GB 2 301 860 is related to a hydraulic shackle comprising a shackle body having an attachment for lifting equipment, a lock bolt for inward or outward movement through holes made in the shackle body and a power cylinder which operates the lock bolt via a mechanism. The mechanism comprises a link arm which at one end thereof is pivotably secured to the lock bolt, and the mechanism is geometrically designed such that the opposite end of the link arm describes a curve as the lock bolt moves in or out, said mechanism exerting on the lock bolt a transverse force at the end of the lock bolt, in addition to an axial force, which transverse force is designed to work in the opposite direction of the force which, due to the load, acts on the lock bolt within the shackle body, in order to counteract downward deflection of the lock bolt caused by a suspended load.

GB 1 349 430 is related to a bobbin hanger having bellows that can be inflated to drive a slider downwardly and so cause two pawls to move outwardly of the hanger about a common pin. When the bellows are not inflated the slider is moved upwardly by a spring. In the absence of a bobbin a coiled spring then returns the pawls to the retracted setting shown. The hanger is carried by a support arm that can be moved downwardly to cause the hanger to enter into an upstanding bobbin. Thereafter inflation of the bellows causes the pawls to move outwardly of the hanger and engage under internal shoulders of the bobbin. The support arm is then raised to cause the pawls to lift and support the bobbin. Under these circumstances, when the bellows are deflated, the pawls do not retract since they are held outwardly disposed by the weight of the bobbin.

EP 2 487 103 is related to an actuator apparatus adapted to be remotely actuated underwater. The apparatus comprises a body, a piston having a pin extending therefrom, wherein the piston is adapted to sealingly engage the body to define a piston chamber, and a conduits for connecting the piston chamber to a fluid container to create a pressure difference between the piston chamber and the ambient water to cause the piston to move relative to the body to cause the pin to move between first and second positions thereof.

An object of the invention is to provide a compact shackle assembly.

This object is accomplished with the shackle assembly according to the invention, wherein the pin displacement mechanism comprises a rotation element which is mounted to the shackle body and rotatable with respect to the shackle body about an axis of rotation which extends perpendicularly to the centreline of the shackle pin and a transmission between the rotation element and the shackle pin for transmitting a rotation of the rotation element to a displacement of the shackle pin along its centreline.

The presence of the rotation element and the transmission in the shackle assembly according to the invention provides the opportunity to create a leveraging effect, hence resulting in a compact unit.

In a particular embodiment the shackle body extends in a main plane, whereas the axis of rotation extends perpendicularly to the main plane. This means that the rotation element can move within the main plane of the shackle body, which provides the opportunity to make the shackle assembly also compact in a direction perpendicularly to the main plane.

The shackle body may comprise a U-shape having a bottom and legs extending from the bottom, whereas end portions of the legs are provided with eyes for receiving the shackle pin, wherein the axis of rotation extends at a level between said bottom and the shackle pin. This allows to minimize the height of the shackle assembly as measured in a direction from the bottom to the eyes.

In a preferred embodiment the rotation element and the transmission form part of a four-bar linkage, wherein the rotation element comprises a first bar which is pivotally coupled to a second bar through a first journal, which second bar is pivotally coupled to a third bar through a second journal remote from the first journal, which third bar is rotatably coupled to the shackle body remote from the second journal, wherein the shackle body forms a fourth bar, wherein the second bar is rotatably coupled to the shackle pin through a pin pivot, wherein the pin pivot lies at a distance from the first and second journals, and wherein the bars and journals are dimensioned and arranged such that the pin pivot is movable in the same direction as the direction of the centreline of the shackle pin.

More specifically the four-bar linkage may form a so-called Hoekens linkage, in which the first journal, the second journal and the pin pivot are aligned. The Hoekens linkage allows the pin pivot to follow a straight path when turning the rotation element by a predefined angle with respect to the shackle body. The shackle assembly will be dimensioned such that the pin pivot follows the straight path between the open and closed shackle position.

The pin pivot may be located outside a circumference of the shackle body in the shackle closed position.

A linear actuator may be rotatably mounted to both the shackle body and the third bar in order to operate the linkage. The linear actuator may be a hydraulic cylinder.

In an alternative embodiment the rotation element comprises a first bar which is pivotally coupled to a second bar through a first journal, which second bar is rotatably coupled to the shackle pin through a pin pivot at a distance from the first journal, and wherein the shackle pin is guided along its centreline by the shackle body. In this case the rotation element forms a crank of a crank mechanism, whereas the second bar forms a connecting rod and the shackle pin forms a piston which is guided by the shackle body. For example, when the shackle body comprises a U-shape having a bottom and legs extending from the bottom, whereas end portions of the legs are provided with eyes for receiving the shackle pin, the shackle pin may be guided by one of the eyes.

A linear actuator may be rotatably mounted to both the first bar and the second bar at a distance from the axis of rotation, the first journal and the pin pivot. The first bar and the second bar form a type of scissors which are rotated with respect to each other through the linear actuator. This means that the stroke of the linear actuator is smaller than the stroke of the shackle pin, which provides the opportunity to create a compact shackle assembly.

The invention is also related to a shackle assembly, comprising a shackle body, a shackle pin and a pin displacement mechanism for moving the shackle pin along its centreline between a shackle closed position and a shackle open position, wherein the shackle pin is provided with a lateral projection located at a distance from the shackle body in the shackle closed position, wherein the shackle assembly is provided with a fluid bellow which is located between the lateral projection and the shackle body such that upon introducing a fluid into the fluid bellow it pushes the lateral projection including the shackle pin away from the shackle body, hence moving the shackle pin from the shackle closed position to the shackle open position. This assembly differs from the assembly as described hereinbefore in that it does not have a rotation element and the cooperating transmission. However, due to the presence of the fluid bellow the shackle assembly also has the advantage of a compact shape in a direction along the centreline of the shackle pin. The fluid bellow may be operated by introducing water, for example.

In a practical embodiment the lateral projection is formed by a flange and the fluid bellow surrounds at least a portion of the shackle pin in the shackle open position.

More specifically, the fluid bellow comprise a coil-shaped flexible tube. Introducing a fluid into the tube creates a tubular coil, whereas emptying the tube leads to a folded compact coil.

The shackle pin may engage a spring which is located between the shackle pin and the shackle body so as to move the shackle pin from the shackle open position to the shackle closed position when fluid is released from the fluid bellow.

Alternatively, the lateral projection may be formed by a plate which is reciprocatingly slidable within a cylinder that is fixed to the shackle body, wherein a space in the cylinder at a side of the plate facing away from the shackle body forms a pressure chamber for receiving a pressurized fluid so as to be able to move the shackle pin from the open shackle position to the closed shackle position. The pressure chamber and the fluid bellow may be part of a hydraulic circuit, which is controlled in a conventional manner.

The invention will hereafter be elucidated with reference to very schematic drawings showing embodiments of the invention by way of example.
Fig. 1 is a perspective view of an embodiment of a shackle assembly according to the invention.
Fig. 2 is a similar view as Fig. 1, but showing the embodiment from a different side.
Fig. 3 is a side view of the embodiment as shown in Figs. 1 and 2 including a pictorial representation for illustrating motions of different parts in three different conditions.
Fig. 4 is a diagram which shows a dimensional relationship of bars of a Hoekens linkage.
Fig. 5 is a similar view as Fig. 3, but showing an alternative embodiment.
Fig. 6 is a sectional view of another alternative embodiment of a shackle assembly according to the invention.
Fig. 7 is a similar view as Fig. 6, but showing the assembly in a different condition.
Fig. 8 is an enlarged view of a part of Fig. 6, indicated by VIII in Fig. 6.

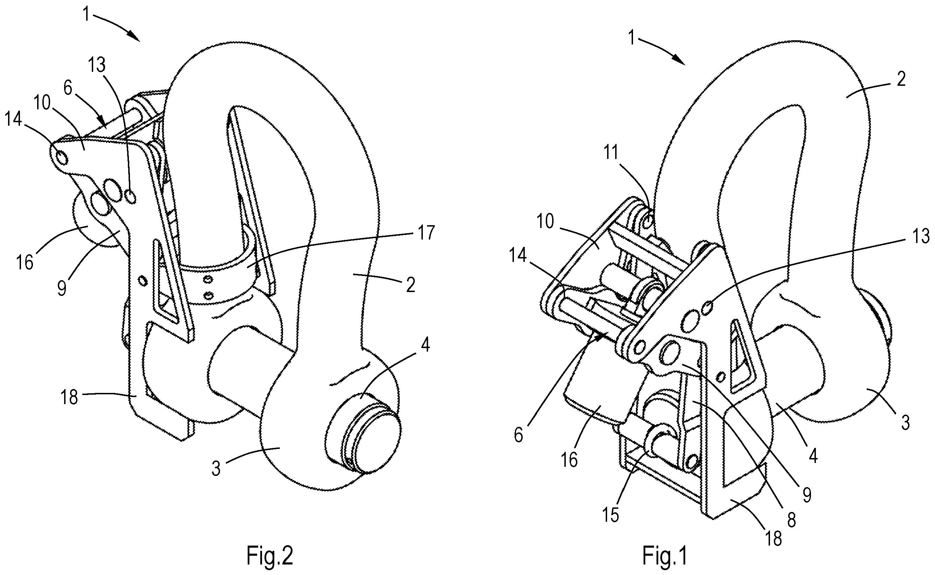

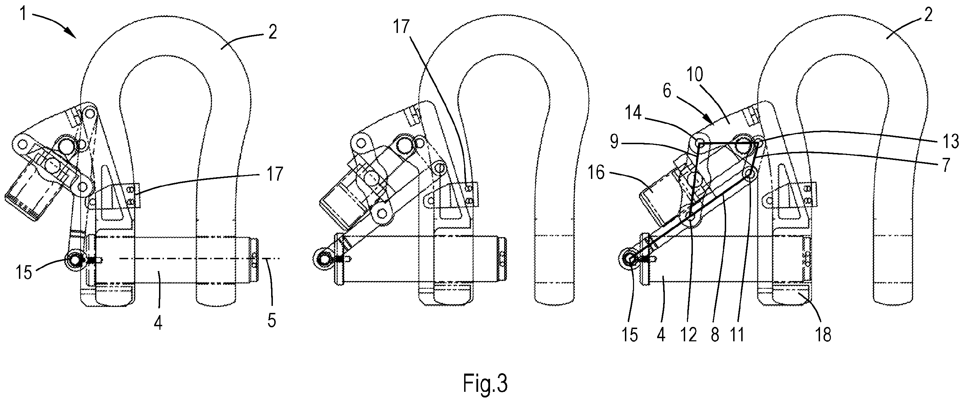

Figs. 1-3 show an embodiment of a shackle assembly 1 according to the invention. The shackle assembly 1 comprises a U-shaped shackle body 2 which has a bottom and legs which extend from the bottom. The shackle body 2 extends in a main plane. End portions of the legs are provided with eyes 3 in which a shackle pin 4 fits. The shackle pin 4 has a centreline 5 and is movable with respect to the shackle body 2 along its centreline 5 between a shackle closed position and a shackle open position. The leftmost picture of Fig. 3 shows the shackle closed position and the other two pictures show shackle open positions. The rightmost picture shows the shackle pin 4 in an end position.

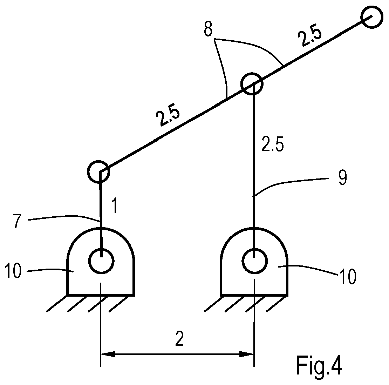

The shackle pin 4 can be moved with respect to the shackle body 2 through a pin displacement mechanism 6, which comprises a four-bar linkage in the form of a so-called Hoekens linkage, which linkage is illustrated by additional lines in the rightmost picture of Fig. 3. Furthermore, Fig. 4 shows a dimensional relationship of a Hoekens linkage in more detail.

The displacement mechanism 6 is provided with a first bar 7, a second bar 8 and a third bar 9. A fourth bar is formed by a support 10 which is fixed to the shackle body 2. The first bar 7 is pivotally coupled to the second bar 8 through a first journal 11 and the second bar 8 is pivotally coupled to the third bar 9 through a second journal 12 which is located at a distance from the first journal 11. The first bar 7 is rotatably coupled to the support 10 through a third journal 13 which is located at a distance from the first journal 11 and the third bar 9 is rotatably coupled to the support 10 through a fourth journal 14 which is located at a distance from the second journal 12 and the third journal 13. The axes of rotation of the journals 11-14 extend perpendicularly to the main plane of the shackle body 2.

The second bar 8 is rotatably coupled to an end of the shackle pin 4 at a pin pivot 15 whereas the second journal 12 lies halfway of the second bar 8 between the first journal 11 and the pin pivot 15. The leftmost picture of Fig. 3 shows that the pin pivot 15 is located outside the shackle body 2 in the shackle closed position. A plane through axes of rotation of the third and fourth journals 13, 14 extends parallel to a plane in which the centreline 5 and an axis of rotation of the pin pivot 15 lies. The pin pivot 15 and the first to fourth journals 11-14 are arranged such that the axis of rotation of the pin pivot 15 is movable along the centreline 5 of the shackle pin 4, as demonstrated in Fig. 3. The dimensionless distances between the first to fourth journals 11-14 and the pin pivot 15 are illustrated in Fig. 4. The arrangement of the Hoekens linkage as shown in Figs. 1-4 allows the pin pivot 15 to follow a straight path when turning the first bar 7 by a predefined angle with respect to the shackle body 2.

The displacement mechanism 6 is also provided with a hydraulic actuator 16 of which one side is rotatably coupled to the support 10 and another side is rotatably coupled to the third bar 9. The rightmost picture of Fig. 3 shows that even in the end position of the shackle pin 4 the displacement mechanism 6 does not extend beyond the pin pivot 15 as seen from the shackle body 2, which creates a compact shackle assembly 1. Fig. 3 shows that the stroke of the hydraulic actuator 16 is smaller than the stroke of the pin pivot 15, which is caused by applying the Hoekens linkage. It is noted that the hydraulic actuator may be replaced by any alternative actuator or an actuator may be omitted such that the displacement mechanism 6 can be operated manually, remotely and/or by means of an ROV when in underwater operations. The skilled person will appreciate that such operating mechanism is not illustrated, but that it can imply any kind of actuating and control system implemented into the displacement mechanism 6.

The support 10 is fixed to the shackle body 2 by a bracket 17 which is clamped about one of the legs of the shackle body 2. The support 10 also comprises two parallel feet 18 which extend parallel to the centreline 5 of the shackle pin 4 at an outer side of one eye 3 of the shackle body 2. This allows the shackle assembly 1 to rest in upright orientation on the ground as shown in Figs. 1-3.

In the embodiment as shown in Figs. 1-3 the first bar 7 may be seen as being a rotation element which is mounted to the shackle body 2 and which is rotatable with respect to the shackle body 2 about an axis of rotation which extends at a distance from and perpendicularly to the centreline 5 of the shackle pin 4. The rotation element and the shackle pin 4 are connected to each other via a transmission in the form of the second bar 8, the third bar 9 and the cooperating journals 11, 12 and 14 which results in a straight movement of the pin pivot 15 between the open and closed shackle position of the shackle pin 4. This means that transverse forces between the shackle pin 4 and the shackle body 2 are negligible during a movement of the shackle pin 4 between the shackle open position and the shackle closed position. There are also alternative embodiments conceivable in which the transmission between the above-mentioned rotation element and the pin pivot 15 is different.

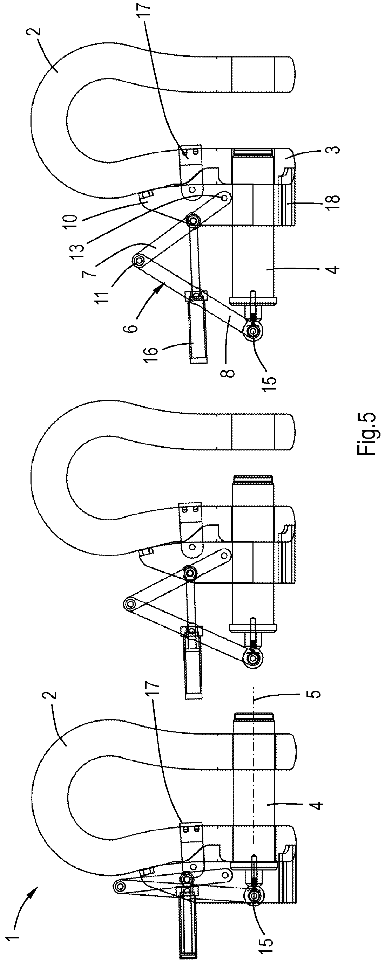

Fig. 5 shows an alternative embodiment of the shackle assembly 1 according to the invention. Parts of the embodiment as shown in Fig. 5 which are similar to parts in the embodiment as shown in Figs. 1-3 have the same reference signs. The pin displacement mechanism 6 of the embodiment as shown in Fig. 5 is a type of crank mechanism, in which the first bar 7 forms a crank, the second bar 8 forms a connecting rod and the shackle pin 4 forms a piston which is guided by one eye 3 of the shackle body 2. The first bar 7 is rotatably coupled to the support 10 through the third journal 13 and pivotally coupled to the second bar 8 through the first journal 11 at a distance from the third journal 13. The second bar 8 is rotatably coupled to an end of the shackle pin 4 at the pin pivot 15 remote from the first journal 11. Due to the guidance by the eye 3 the shackle pin 4 is movable along the centreline 5, as demonstrated in Fig. 5.

The hydraulic actuator 16 is rotatably coupled to the first bar 7 and the second bar 8. Fig. 5 shows that the stroke of the hydraulic actuator 16 is smaller than the stroke of the pin pivot 15, which is caused by applying the crank mechanism and the location of mounting the hydraulic actuator 16.

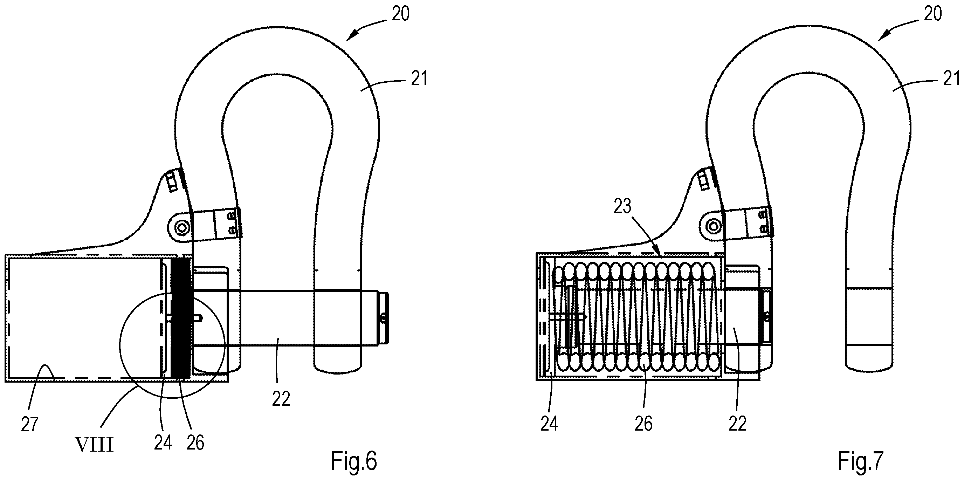

Figs. 6-8 show another alternative embodiment of a shackle assembly 20 according to the invention. This embodiment also comprises a shackle body 21, a shackle pin 22 and a pin displacement mechanism 23 for moving the shackle pin 22 along its centreline between a shackle closed position and a shackle open position. However, the pin displacement mechanism 23 does not comprise a rotation element like the embodiments as described hereinbefore.

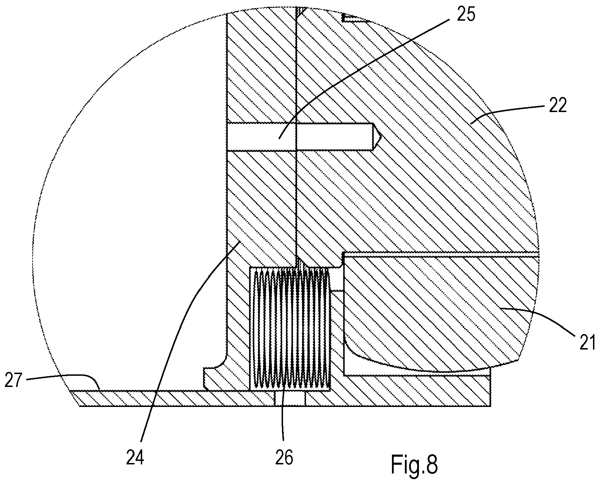

Fig. 8 shows that a circular plate 24 is fixed to the shackle pin 22 through a connector pin 25. The circular plate 24 is located at a distance from the shackle body 21 in the shackle closed position, which is shown in Figs. 6 and 8. The shackle assembly 20 is provided with a fluid bellow in the form of a coil-shaped flexible tube 26 which is located between the shackle body 21 and the plate 24. The plate 24 is movable within a cylinder 27 which holds the tube 26 in coil shape when a fluid is introduced into the tube 26 such that it expands as shown in Fig. 7. Due to expanding the tube 26 the plate 24 including the shackle pin 22 is moved in a direction away from the shackle body 21, hence moving the shackle pin 22 from the shackle closed position to the shackle open position. In the shackle open position the expanded coiled tube 26 surrounds the retracted shackle pin 22, see Fig. 7. It is noted that mounting the circular plate 24 to the shackle pin 22 by the connector pin 25 can be applied to a shackle pin of a standard conventional shackle assembly.

In order to move the shackle pin 22 from the shackle open position to the shackle closed position a fluid is introduced into the cylinder 27 at a side of the plate 24 opposite to the side where the tube 26 is located. Upon exerting a force onto the plate 24 in a direction in which the shackle pin 22 moves from the shackle open position to the shackle closed position the fluid in the tube 26 can be discharged so as to allow the tube 26 to shrink. This condition is shown in Figs. 6 and 8.

In an alternative embodiment the shackle assembly 20 may be provided with a spring which is located at a side of the plate 24 opposite to the side where the tube 26 is located. During introducing a fluid into the tube 26 and moving the plate 24 in a direction away from the shackle body 21 the spring is loaded whereas the spring will move the shackle pin 22 back upon discharging the fluid from the tube 26.

Filling and emptying the tube 26 and the cylinder 27 may be controlled by a hydraulic controller, for example.

The invention is not limited to the embodiments shown in the drawings and described hereinbefore, which may be varied in different manners within the scope of the claims and their technical equivalents.

## Claims

1. A shackle assembly (1), comprising a shackle body (2), a shackle pin (4) and a pin displacement mechanism (6) for moving the shackle pin (4) along its centreline (5) between a shackle closed position and a shackle open position, wherein the pin displacement mechanism (6) comprises a rotation element (7) which is mounted to the shackle body (2) and rotatable with respect to the shackle body (2) about an axis of rotation (13) which extends perpendicularly to the centreline (5) of the shackle pin (4) and a transmission (8, 9, 11, 12, 14, 15) between the rotation element and the shackle pin (4) for transmitting a rotation of the rotation element (7) to a displacement of the shackle pin (4) along its centreline (5), **characterized in that** the rotation element and the transmission (6) form part of a four-bar linkage, wherein the rotation element comprises a first bar (7) which is pivotally coupled to a second bar (8) through a first journal (11), which second bar (8) is pivotally coupled to a third bar (9) through a second journal (12) remote from the first journal (11), which third bar (9) is rotatably coupled to the shackle body (2) remote from the second journal (12), wherein the shackle body (2) forms a fourth bar, wherein the second bar (8) is rotatably coupled to the shackle pin (4) through a pin pivot (15), wherein the pin pivot (15) lies at a distance from the first and second journals (11, 12), and wherein the bars (7-10) and the journals (11-14) are dimensioned and arranged such that the pin pivot (15) is movable in the same direction as the direction of the centreline (5) of the shackle pin (4).

2. A shackle assembly (1) according to claim 1, wherein the shackle body (2) extends in a main plane and wherein the axis of rotation (13) extends perpendicularly to said main plane.

3. A shackle assembly (1) according to claim 2, wherein the shackle body (2) comprises a U-shape having a bottom and legs extending from the bottom, whereas end portions of the legs are provided with eyes (3) for receiving the shackle pin (4), wherein the axis of rotation (13) extends at a level between said bottom and the shackle pin (4).

4. A shackle assembly (1) according to any one of the preceding claims, wherein the four-bar linkage forms a Hoekens linkage, in which the first journal (11), the second journal (12) and the pin pivot (15) are aligned.

5. A shackle assembly (1) according to any one of the preceding claims, wherein the pin pivot (15) is located outside a circumference of the shackle body (2) in the shackle closed position.

6. A shackle assembly (1) according to any one of the preceding claims, wherein a linear actuator (16) is rotatably mounted to both the shackle body (2) and the third bar (9).

7. A shackle assembly (1), comprising a shackle body (2), a shackle pin (4) and a pin displacement mechanism (6) for moving the shackle pin (4) along its centreline (5) between a shackle closed position and a shackle open position, wherein the pin displacement mechanism (6) comprises a rotation element (7) which is mounted to the shackle body (2) and rotatable with respect to the shackle body (2) about an axis of rotation (13) which extends perpendicularly to the centreline (5) of the shackle pin (4) and a transmission (8, 9, 11, 12, 14, 15) between the rotation element and the shackle pin (4) for transmitting a rotation of the rotation element (7) to a displacement of the shackle pin (4) along its centreline (5), **characterized in that** the rotation element comprises a first bar (7) which is pivotally coupled to a second bar (8) through a first journal (11), which second bar (8) is rotatably coupled to the shackle pin (4) through a pin pivot (15) at a distance from the first journal (11), and wherein the shackle pin (4) is guided along its centreline (5) by the shackle body (2),
wherein a linear actuator (16) is rotatably mounted to both the first bar (7) and the second bar (8) at a distance from the axis of rotation (13), the first journal (11) and the pin pivot (15).

8. A shackle assembly (20), comprising a shackle body (21), a shackle pin (22) and a pin displacement mechanism (23) for moving the shackle pin (22) along its centreline between a shackle closed position and a shackle open position, wherein the shackle pin (22) is provided with a lateral projection (24) located at a distance from the shackle body (21) in the shackle closed position, **characterized in that** the shackle assembly (20) is provided with a fluid bellow (26) which is located between the lateral projection (24) and the shackle body (22) such that upon introducing a fluid into the fluid bellow (26) it pushes the lateral projection (24) including the shackle pin (22) away from the shackle body (21), hence moving the shackle pin (22) from the shackle closed position to the shackle open position.

9. A shackle assembly (20) according to claim 8, wherein the lateral projection is formed by a flange (24) and the fluid bellow (26) surrounds at least a portion of the shackle pin (22) in the shackle open position.

10. A shackle assembly (20) according to claim 9 wherein the fluid bellow comprises a coil-shaped flexible tube (26) .

11. A shackle assembly (20) according to any one of the claims 8-10, wherein the shackle pin (22) engages a spring which is located between the shackle pin (22) and the shackle body (21) so as to move the shackle pin (22) from the shackle open position to the shackle closed position when fluid is released from the fluid bellow (26).

12. A shackle assembly (20) according to any one of the claims 8-10, wherein the lateral projection is formed by a plate (24) which is reciprocatingly slidable within a cylinder (27) that is fixed to the shackle body (21), wherein a space in the cylinder (27) at a side of the plate (24) facing away from the shackle body (20) forms a pressure chamber for receiving a pressurized fluid so as to be able to move the shackle pin (22) from the open shackle position to the closed shackle position.

## Patentansprüche

1. Schäkelanordnung (1), aufweisend einen Schäkelkörper (2), einen Schäkelbolzen (4) und einen Bolzenverschiebungsmechanismus (6) zum Bewegen des Schäkelbolzens (4) entlang seiner Mittellinie (5) zwischen einer geschlossenen Schäkelposition und einer offenen Schäkelposition, wobei der Bolzenverschiebungsmechanismus (6) aufweist: ein Rotationselement (7), das an dem Schäkelkörper (2) angebracht ist und bezüglich des Schäkelkörpers (2) um eine Rotationsachse (13), die sich senkrecht zu der Mittellinie (5) des Schäkelbolzens (4) erstreckt, rotierbar ist, und eine zwischen dem Rotationselement und dem Schäkelbolzen (4) angeordnete Übertragungsvorrichtung (8, 9, 11, 12, 14, 15) zum Umwandeln einer Rotation des Rotationselements (7) in eine Verschiebung des Schäkelbolzens (4) entlang seiner Mittellinie (5),
**dadurch gekennzeichnet, dass** das Rotationselement und die Übertragungsvorrichtung (6) Teil einer Vier-Stangen-Gelenkverbindung bilden, wobei das Rotationselement eine erste Stange (7) aufweist, die über einen ersten Drehzapfen (11) drehbar an eine zweite Stange (8) gekoppelt ist, die zweite Stange (8) über einen zweiten Drehzapfen (12) in Abstand von dem ersten Drehzapfen (11) drehbar an eine dritte Stange (9) gekoppelt ist, die dritte Stange (9) in Abstand von dem zweiten Drehzapfen (12) drehbar an den Schäkelkörper (2) gekoppelt ist, wobei der Schäkelkörper (2) eine vierte Stange bildet, wobei die zweite Stange (8) über einen Bolzenlagerzapfen (15) rotierbar an den Schäkelbolzen (4) gekoppelt ist, wobei der Bolzenlagerzapfen (15) in einem Abstand von dem ersten und zweiten Drehzapfen (11, 12) angeordnet ist, und wobei die Stangen (7-10) und die Drehzapfen (11-14) dimensioniert und angeordnet sind, derart, dass der Bolzenlagerzapfen (15) in eine Richtung bewegbar ist, die der Richtung der Mittellinie (5) des Schäkelbolzens (4) entspricht.

2. Schäkelanordnung (1) nach Anspruch 1, wobei der Schäkelkörper (2) sich in einer Hauptebene erstreckt, und wobei die Rotationsachse (13) sich senkrecht zu der Hauptebene erstreckt.

3. Schäkelanordnung (1) nach Anspruch 2, wobei der Schäkelkörper (2) eine U-Form mit einem Boden und sich von dem Boden erstreckenden Beinen aufweist, wobei Endabschnitte der Beine mit Augen (3) zum Empfangen des Schäkelbolzens (4) versehen sind, wobei die Rotationsachse (13) sich in einer Höhe zwischen dem Boden und dem Schäkelbolzen (4) erstreckt.

4. Schäkelanordnung (1) nach einem der vorstehenden Ansprüche, wobei die Vier-Stangen-Gelenkverbindung eine Hoekens-Gelenkverbindung bildet, in der der erste Drehzapfen (11), der zweite Drehzapfen (12) und der Bolzenlagerzapfen (15) in einer Linie ausgerichtet sind.

5. Schäkelanordnung (1) nach einem der vorstehenden Ansprüche, wobei in der geschlossenen Schäkelposition der Bolzenlagerzapfen (15) außerhalb eines Umfangs des Schäkelkörpers (2) angeordnet ist.

6. Schäkelanordnung (1) nach einem der vorstehenden Ansprüche, wobei ein linearer Aktuator (16) sowohl an dem Schäkelkörper (2) als auch an der dritten Stange (9) rotierbar angebracht ist.

7. Schäkelanordnung (1), aufweisend einen Schäkelkörper (2), einen Schäkelbolzen (4) und einen Bolzenverschiebungsmechanismus (6) zum Bewegen des Schäkelbolzens (4) entlang seiner Mittellinie (5) zwischen einer geschlossenen Schäkelposition und einer offenen Schäkelposition, wobei der Bolzenverschiebungsmechanismus (6) aufweist: ein Rotationselement (7), das an dem Schäkelkörper (2) angebracht ist und bezüglich des Schäkelkörpers (2) um eine Rotationsachse (13), die sich senkrecht zu der Mittellinie (5) des Schäkelbolzens (4) erstreckt, rotierbar ist, und eine zwischen dem Rotationselement und dem Schäkelbolzen (4) angeordnete Übertragungsvorrichtung (8, 9, 11, 12, 14, 15) zum Umwandeln einer Rotation des Rotationselements (7) in eine Verschiebung des Schäkelbolzens (4) entlang seiner Mittellinie (5),
**dadurch gekennzeichnet, dass** das Rotationselement eine erste Stange (7) aufweist, die über einen ersten Drehzapfen (11) drehbar an eine zweite Stange (8) gekoppelt ist, die zweite Stange (8) über einen Bolzenlagerzapfen (15) in Abstand von dem ersten Drehzapfen (11) rotierbar an den Schäkelbolzen (4) gekoppelt ist, und wobei der Schäkelbolzen (4) von dem Schäkelkörper (2) entlang seine Mittelinie (5) geführt wird,
wobei ein linearer Aktuator (16) in einem Abstand von der Rotationsachse (13), dem ersten Drehzapfen (11) und dem Bolzenlagerzapfen (15) sowohl an der ersten Stange (7) als auch an der zweiten Stange (8) rotierbar angebracht ist.

8. Schäkelanordnung (20), aufweisend einen Schäkelkörper (21), einen Schäkelbolzen (22) und einen Bolzenverschiebungsmechanismus (23) zum Bewegen des Schäkelbolzens (22) entlang seiner Mittellinie zwischen einer geschlossenen Schäkelposition und einer offenen Schäkelposition, wobei der Schäkelbolzen (22) mit einem seitlichen Vorsprung (24) versehen ist, der in der geschlossenen Schäkelposition in einem Abstand von dem Schäkelkörper angeordnet ist,
**dadurch gekennzeichnet, dass** die Schäkelanordnung (20) mit einem Fluidbalg (26) versehen ist, der zwischen dem seitlichen Vorsprung (24) und dem Schäkelkörper (22) angeordnet ist, so dass beim Einströmen von Fluid in den Fluidbalg (26) der seitliche Vorsprung (24) und mit ihm der Schäkelbolzen (22) weg von dem Schäkelkörper (21) gestoßen wird, folglich der Schäkelbolzen (22) von der geschlossenen Schäkelposition in die offene Schäkelposition bewegt wird.

9. Schäkelanordnung (20) nach Anspruch 8, wobei der seitliche Vorsprung aus einem Flansch (24) besteht und in der offenen Schäkelposition der Fluidbalg (26) mindestens einen Teil des Schäkelbolzens (22) umgibt.

10. Schäkelanordnung (20) nach Anspruch 9, wobei der Fluidbalg ein spulenförmiges flexibles Rohr (26) aufweist.

11. Schäkelanordnung (20) nach einem der Ansprüche 8 bis 10, wobei der Schäkelbolzen (22) eine Feder greift, die zwischen dem Schäkelbolzen (22) und dem Schäkelkörper (21) angeordnet ist, um so den Schäkelbolzen (22) von der offenen Schäkelposition in die geschlossene Schäkelposition zu bewegen, wenn Fluid aus dem Fluidbalg (26) entlassen wird.

12. Schäkelanordnung (20) nach einem der Ansprüche 8 bis 10, wobei der seitliche Vorsprung durch eine Platte (24) gebildet ist, die in einem an dem Schäkelkörper (21) angebrachten Zylinder (27) hin und her gleitbar ist, wobei ein Raum in dem Zylinder (27) an einer von dem Schäkelkörper (20) abgewandten Seite der Platte (24) eine Druckkammer zum Empfangen eines unter Druck stehenden Fluids bildet, um so fähig zu sein, den Schäkelbolzen (22) von der offenen Schäkelposition in die geschlossene Schäkelposition zu bewegen.

## Revendications

1. Ensemble manille (1), comprenant un corps de manille (2), une broche de manille (4) et un mécanisme de déplacement de broche (6) pour déplacer la broche de manille (4) le long de sa ligne centrale (5) entre une position de manille fermée et une position de manille ouverte, dans lequel le mécanisme de déplacement de broche (6) comprend un élément de rotation (7) qui est monté sur le corps de manille (2) et rotatif par rapport au corps de manille (2) autour d'un axe de rotation (13) qui s'étend perpendiculairement à la ligne centrale (5) de la broche de manille (4) et une transmission (8, 9, 11, 12, 14, 15) entre l'élément de rotation et la broche de manille (4) pour transmettre une rotation de l'élément de rotation (7) à un déplacement de la broche de manille (4) le long de sa ligne centrale (5), **caractérisé en ce que** l'élément de rotation et la transmission (6) font partie d'une liaison à quatre barres, dans lequel l'élément de rotation comprend une première barre (7) qui est couplée de manière pivotante à une deuxième barre (8) par l'intermédiaire d'un premier tourillon (11), la deuxième barre (8) est couplée de manière pivotante à une troisième barre (9) par l'intermédiaire d'un deuxième tourillon (12) à distance du premier tourillon (11), la troisième barre (9) est couplée de manière rotative au corps de manille (2) à distance du deuxième tourillon (12), dans lequel le corps de manille (2) forme une quatrième barre, dans lequel la deuxième barre (8) est couplée de manière rotative à la broche de manille (4) par l'intermédiaire d'un pivot de broche (15), dans lequel le pivot de broche (15) se trouve à une distance des premier et deuxième tourillons (11, 12), et dans lequel les barres (7-10) et les tourillons (11-14) sont dimensionnés et agencés de sorte que le pivot de broche (15) soit mobile dans la même direction que la direction de la ligne centrale (5) de la broche de manille (4) .

2. Ensemble manille (1) selon la revendication 1, dans lequel le corps de manille (2) s'étend dans un plan principal et dans lequel l'axe de rotation (13) s'étend perpendiculairement audit plan principal.

3. Ensemble manille (1) selon la revendication 2, dans lequel le corps de manille (2) présente une forme en U avec un fond et des branches s'étendant depuis le fond, tandis que des parties d'extrémité des branches sont pourvues d'oeillets (3) pour recevoir la broche de manille (4), dans lequel l'axe de rotation (13) s'étend à un niveau entre ledit fond et la broche de manille (4).

4. Ensemble manille (1) selon l'une quelconque des revendications précédentes, dans lequel la liaison à quatre barres forme une liaison de Hoekens, dans laquelle le premier tourillon (11), le deuxième tourillon (12) et le pivot de broche (15) sont alignés.

5. Ensemble manille (1) selon l'une quelconque des revendications précédentes, dans lequel le pivot de broche (15) est situé à l'extérieur d'une circonférence du corps de manille (2) dans la position de manille fermée.

6. Ensemble manille (1) selon l'une quelconque des revendications précédentes, dans lequel un actionneur linéaire (16) est monté de manière rotative à la fois sur le corps de manille (2) et la troisième barre (9).

7. Ensemble manille (1), comprenant un corps de manille (2), une broche de manille (4) et un mécanisme de déplacement de broche (6) pour déplacer la broche de manille (4) le long de sa ligne centrale (5) entre une position de manille fermée et une position de manille ouverte, dans lequel le mécanisme de déplacement de broche (6) comprend un élément de rotation (7) qui est monté sur le corps de manille (2) et rotatif par rapport au corps de manille (2) autour d'un axe de rotation (13) qui s'étend perpendiculairement à la ligne centrale (5) de la broche de manille (4) et une transmission (8, 9, 11, 12, 14, 15) entre l'élément de rotation et la broche de manille (4) pour transmettre une rotation de l'élément de rotation (7) à un déplacement de la broche de manille (4) le long de sa ligne centrale (5), **caractérisé en ce que** l'élément de rotation comprend une première barre (7) qui est couplée de manière pivotante à une deuxième barre (8) par l'intermédiaire d'un premier tourillon (11), la deuxième barre (8) est couplée de manière rotative à la broche de manille (4) par l'intermédiaire d'un pivot de broche (15) à une distance du premier tourillon (11), et dans lequel la broche de manille (4) est guidée le long de sa ligne centrale (5) par le corps de manille (2),
dans lequel un actionneur linéaire (16) est monté de manière rotative à la fois sur la première barre (7) et la deuxième barre (8) à une distance de l'axe de rotation (13), du premier tourillon (11) et du pivot de broche (15).

8. Ensemble manille (20), comprenant un corps de manille (21), une broche de manille (22) et un mécanisme de déplacement de broche (23) pour déplacer la broche de manille (22) le long de sa ligne centrale entre une position de manille fermée et une position de manille ouverte, dans lequel la broche de manille (22) est pourvue d'une saillie latérale (24) située à une distance du corps de manille (21) dans la position de manille fermée, **caractérisé en ce que** l'ensemble manille (20) est pourvu d'un soufflet de fluide (26) qui est situé entre la saillie latérale (24) et le corps de manille (22) de sorte que, à l'introduction d'un fluide dans le soufflet de fluide (26), il pousse la saillie latérale (24) comprenant la broche de manille (22) à l'écart du corps de manille (21), ce qui déplace la broche de manille (22) de la position de manille fermée à la position de manille ouverte.

9. Ensemble manille (20) selon la revendication 8, dans lequel la saillie latérale est formée par une bride (24) et le soufflet de fluide (26) entoure au moins une partie de la broche de manille (22) dans la position de manille ouverte.

10. Ensemble manille (20) selon la revendication 9, dans lequel le soufflet de fluide comprend un tube souple de forme hélicoïdale (26).

11. Ensemble manille (20) selon l'une quelconque des revendications 8 à 10, dans lequel la broche de manille (22) se met en prise avec un ressort qui est situé entre la broche de manille (22) et le corps de manille (21) de manière à déplacer la broche de manille (22) de la position de manille ouverte à la position de manille fermée lorsqu'un fluide est libéré du soufflet de fluide (26).

12. Ensemble manille (20) selon l'une quelconque des revendications 8 à 10, dans lequel la saillie latérale est formée par une plaque (24) qui peut coulisser en va-et-vient à l'intérieur d'un cylindre (27) qui est fixé au corps de manille (21), dans lequel un espace dans le cylindre (27) au niveau d'un côté de la plaque (24) orienté à l'opposé du corps de manille (20) forme une chambre de pression pour recevoir un fluide pressurisé de manière à pouvoir déplacer la broche de manille (22) de la position de manille ouverte à la position de manille fermée.
